# EUROPEAN PATENT APPLICATION

(11) **EP 1 746 112 A1**
(43) Date of publication of application: **24.01.2007**
(21) Application number: 05291548.5
(22) Date of filing: 19.07.2005
(51) Int. Cl.: C08F 10/00, C08F 4/70

(54) **Polymerisation catalyst system based on monooxime ligands**

(71) Applicant: TOTAL PETROCHEMICALS RESEARCH FELUY, 7181 Seneffe (Feluy) (BE); Centre National de la Recherche Scientifique (CNRS), 75016 Paris (FR)
(72) Inventor: Boulanger, Loïse, 35690 Acigné (FR); Lavastre, Olivier, 35490 Gahard (FR); Sirol, Sabine, 1440 Wauthier-Braine (BE); Razavi, Abbas, 7000 Mons (BE)
(74) Representative: Roufosse, Micheline C.

(57) **Abstract**

The present invention discloses active oligomerisation and polymerisation catalyst systems based on monooxime ligands.

## Description

This invention relates to the field of monooxime ligands and their use in catalyst system for the polymerisation of ethylene and alpha-olefins.

There exists a multitude of catalyst systems available for polymerising or oligomerising ethylene and alpha-olefins, but there is a growing need for finding new systems capable to tailor polymers with very specific properties. More and more post-metallocene catalyst components based on early or late transition metals from Groups 3 to 10 of the Periodic Table have recently been investigated such as for example those disclosed in Gibson and al. review (Gibson, V.C.; Spitzmesser, S.K., Chem. Rev. 2003, 103, p. 283). But there is still a need to improve either the specificities or the performances of these systems.

It is an aim of the present invention to prepare a polymerisation catalyst system based on monooxime ligands.

It is also an aim of the present invention to use monooxime ligand-based catalyst system for the homo- or co-polymerisation of ethylene and alpha-olefins.

Accordingly, the present invention discloses monooxime ligands of general formula 1 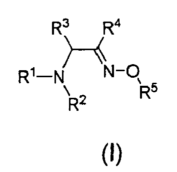 wherein R¹, R² R³, R⁴ and R⁵ are each independently selected from H or alkyl groups having from 1 to 20 carbon atoms or aryl groups having from 3 to 18 carbon atoms or functional groups such as heterocycles or two neighbouring R' can be linked together to form a ring.

The present invention also discloses a method for preparing monooxime ligands that comprises the steps of:
a) dissolving in a solvent a secondary amine of formula 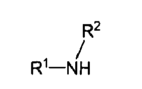 wherein R¹ and R² are as described here-above,
b) suspending in the same or another solvent an oxime precursor of formula 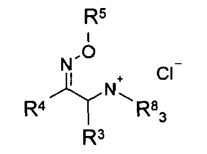 wherein R⁸ is an alkyl group and R³, R⁴ and R⁵ are as described above;
c) reacting the secondary amine with at least 1 equivalent of the oxime precursor;
d) separating the monooxime ligand from residual oxime precursor and salt by-product;
e) retrieving the monooxime ligand.

An oxime precursor TACO is described for example in Goldcamp et al. (M.J. Goldcamp, S.D. Edison, L.N. Squires, D.T. Rosa, N.K. Vowels, N.L. Coker, J.A. Krause Bauer, and M.J. Baldwin, in Inorg. Chem., 42, 717-728, 2003) or in Pavlishehuk et al. (V. V. Pavlishehuk, S.V. Kolotilov, A.W. Addison, M.J. Prushan, R.J. Butcher and L.K. Thompson, in Inorg. Chem. 38, 1759-1766, 1999).

The oxime precursor can be prepared according to the scheme 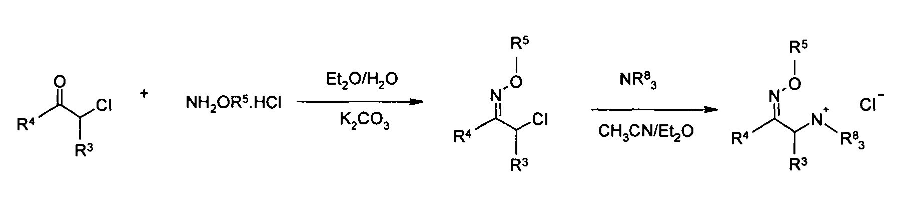 wherein preferably, R³ and R⁵ are the same and are hydrogen, R⁴ is methyl and R⁸ is ethyl : this preferred precursor is called TACO.

The secondary amine is obtained by reacting a primary amine R¹-NH₂ with an aldehyde R²-CHO followed by a treatment with a reducing agent, preferably with NaBH₄. The reaction temperature is selected according to the substituents' reactivity. Heating can be carried out either by conventional methods or with microwave energy.

Among the preferred embodiments according to the present invention, R¹ and R² can each be independently selected from isopropyl, n-butyl, benzyl, cyclohexyl, pyridine, thiophene, furane, phenyl, mesityl.

Preferably, both the secondary amine and the oxime precursor are suspended in the same solvent. The solvent is polar, preferably, it is acetonitrile.

The catalyst component is then prepared by complexing the ligand with a metallic precursor in a ratio from 1/1 to 2/1. The metallic precursor and the ligand are placed in a solvent and they are allowed to react under stirring for a period of time of from 2 to 10 hours at a temperature of from 10 to 80 °C preferably at room temperature (about 25 °C).

The metal is selected from groups 6 to 10 of the Periodic Table. Preferably, it is Cr, Fe, Co, Ni, Pd, more preferably it is nickel.

The solvent is polar or apolar. Preferably it is tetrahydrofuran (THF).

An active catalyst system is then prepared by adding an activating agent having an ionising action.

Any activating agent having an ionising action known in the art may be used for activating the monooxime catalyst component. For example, it can be selected from aluminium-containing or boron-containing compounds. The aluminium-containing compounds comprise aluminoxane and/or alkyl aluminium.

The aluminoxanes are preferred and may comprise oligomeric linear and/or cyclic alkyl aluminoxanes represented by the formula: 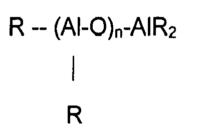 for oligomeric, linear aluminoxanes and 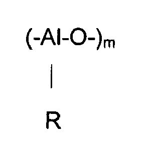 for oligomeric, cyclic aluminoxane,
wherein n is 1-40, preferably 10-20, m is 3-40, preferably 3-20 and R is a C₁-C₈ alkyl group and preferably methyl.

Suitable boron-containing activating agents that can be used comprise a triphenylcarbenium boronate such as tetrakis-pentafluorophenyl-borato-triphenylcarbenium as described in EP-A-0427696, or those of the general formula [L'-H] + [B Ar₁ Ar₂ X₃ X₄]- as described in EP-A-0277004 (page 6, line 30 to page 7, line 7).

The preferred activating agent is aluminoxane. The amount of aluminoxane necessary to activate the catalyst component is selected to have a Al/M ratio of from 100 to 3000.

The catalyst system can also be supported. The support if present can be a porous mineral oxide, advantageously selected from silica, alumina and mixtures thereof. Preferably it is silica.

The present invention also discloses a method for oligomerising and for homo- or co-polymerising ethylene and alpha-olefins that comprises the steps of:
a) injecting the active catalyst system into the reactor;
b) injecting the monomer and optional comonomer into the reactor;
c) maintaining under polymerising conditions;
d) retrieving the oligomers and polymers.

The polymerisation and oligomerisation method is not particularly limited and it can be carried out at a temperature of from 20 to 85°C and under a pressure of from 0.5 to 50 bars.

The preferred monomers and comonomers are selected from ethylene, propylene and hexene.

### List of figures.

Figure 1 represents the structure of a nickel complex prepared from a furane-furane ligand.
Figure 2 represents the structure of a nickel complex prepared from a furane-phenyl ligand.

### Examples.

### Synthesis of the ligand.

### a) Synthesis of the oxime precursor, TACO.

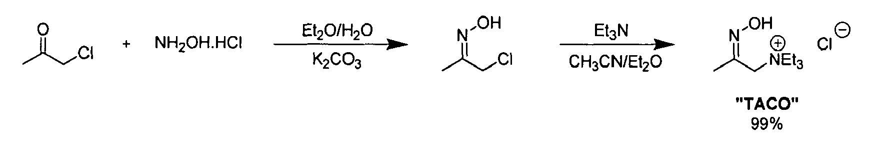

In a 250 mL flask, 3.82 g (55 mmol, 1.1 equ) of hydroxylamine hydrochloride were dissolved in 20 mL of water. A solution of 4.15 mL (50 mmol, 1 equ) of chloroacetone in 50 mL of ether was added to the flask. 3.8 g (27.5 mmol, 0.5 equ) of potassium carbonate were slowly added little by little, under stirring, at a temperature of 0 °C. The biphasic mixture was brought back to room temperature (about 25 °C) and was stirred for a period of time of 2 hours.

The two phases were then separated and the aqueous phase was extracted with 15 mL of ether. The two ether phases were combined and 7.31 g (52 mmol, 1.04 equ) of triethylamine diluted in 15 mL of acetonitrile were added drop-wise, under stirring. It was kept under stirring for a period of time of 30 minutes and gave a white precipitate that was filtered out and washed with 30 mL of cold acetonitrile. After drying under vacuum, 10.31 g of solid (TACO) were obtained with a yield of 99 %. The structure of TACO was confirmed by ¹H NMR analysis.

### b) Synthesis of secondary amines.

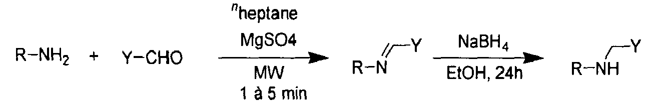

In a micro-wave cell, magnesium sulphate, 5 mL of ⁿheptane, 4 mmol of primary amine and 4 mmol of aldehyde were added. The mixture was heated in the micro-wave cell with a power of 100 to 300 W for 1 to 5 minutes. After cooling, the mixture was filtered, rinsed with ethyl acetate and the organic phases were assembled.

After evaporation under vacuum, 8 mL of absolute ethanol were added to the residue followed by the addition of sodium borohydride. The reaction mixture was stirred for a period of time of 24 hours at a temperature of 20 to 75 °C. The solvent was then evaporated under vacuum and the residue was treated with 15 mL of ethyl acetate. The sodium borohydride was than hydrolysed with 10 mL of water and the aqueous phase was removed. The organic phase was dried on magnesium sulphate, filtered and evaporated under vacuum.

Several combinations of aldehydes and primary amines were used to prepare different secondary amines. For each example, the amount of sodium borohydride and the reaction temperature are displayed in Table I

**TABLE I.**

| Aldéhyde | Amine I^{r} | NaBH₄ | T | Amine II^{r} | Yield |
|---|---|---|---|---|---|
| 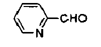 | 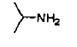 | **165 mg 1.1 éq** | **20 °C** | 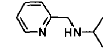 | >99% |
| 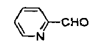 | 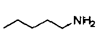 | | | 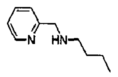 | >99% |
| 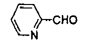 | 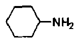 | | | 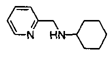 | >99% |
| 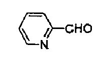 | 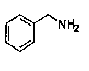 | | | 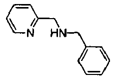 | 91% |
| 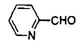 | 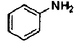 | | | 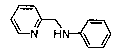 | >99% |
| 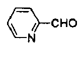 | 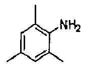 | **450 mg 3 éq.** | | 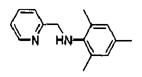 | 93% |
| 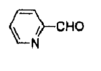 | 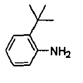 | | **75 °c** | 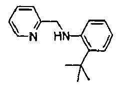 | 67% |
| 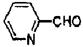 | 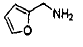 | | **20 °C** | 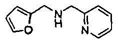 | 65% |
| 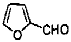 | 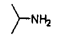 | **165 mg** | **20 °C** | 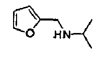 | 56% |
| 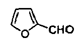 | 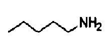 | **1.1 eq.** | | 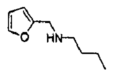 | 96% |
| 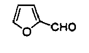 | 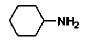 | **165 mg 1.1 éq.** | **20 °C** | 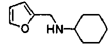 | >99% |
| 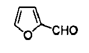 | 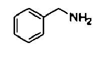 | | | 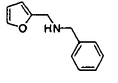 | >99% |
| 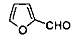 | 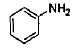 | | | 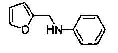 | >99% |
| 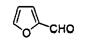 | 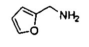 | **450 mg 3 éq.** | | 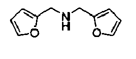 | >99% |
| 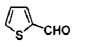 | 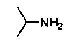 | **165 mg 1.1 éq.** | **20°C** | 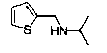 | >99% |
| 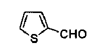 | 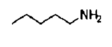 | | | 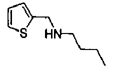 | >99% |
| 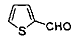 | 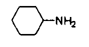 | | | 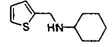 | 95% |
| 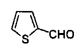 | 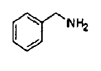 | | | 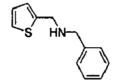 | >99% |
| 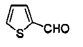 | 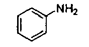 | | | 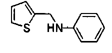 | >99% |
| 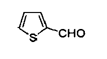 | 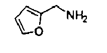 | **450 mg 3 éq.** | | 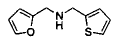 | >99% |

### c) Synthesis of monooxime ligands.

All the secondary amines prepared in b) were then used to prepare ligands according to the following general scheme: 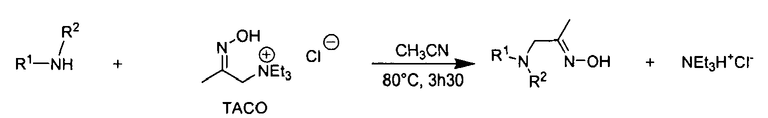 1.5 mmol (1 equ) of the secondary amine was dissolved in 20 mL of acetonitrile and 1.1 to 1.5 equivalents of TACO were added. The mixture was heated at a temperature of 80 °C for a period of time of 3h30. The solvent was vaporised and the residue was mixed with ethyl acetate. The mixture was then filtered to remove residual TACO and triethylamine salt and the filtrate was vaporised under vacuum.

The reaction conditions and resulting ligands are displayed in Table II

**TABLE II.**

| **Amine** | **Ligand** | **TACO** | **Yield** |
|---|---|---|---|
| 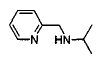 | 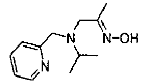 | 344 mg 1.65 mmol 1.1 éq. | 87 % |
| 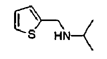 | 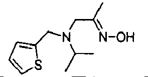 | | 92% |
| 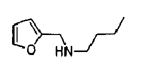 | 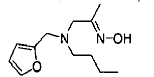 | | 96% |
| 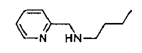 | 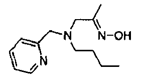 | | 92% |
| 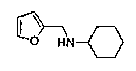 | 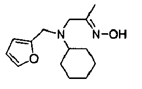 | | 99 % |
| 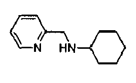 | 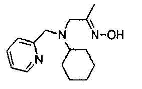 | | 41% |
| 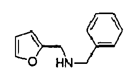 | 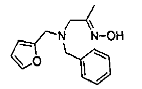 | | 99% |
| 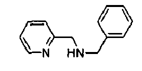 | 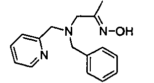 | | 92% |
| 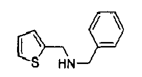 | 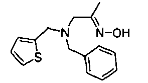 | 344 mg 1.65 mmol 1.1 éq. | 99 % |
| 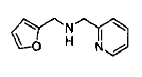 | 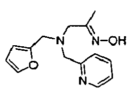 | | 91 % |
| 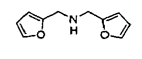 | 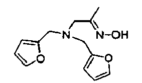 | | 98 % |
| 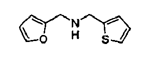 | 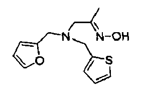 | | 97 % |
| 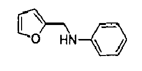 | 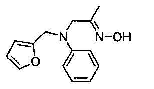 | 470 mg 2.25 mmol 1.5 éq. | (*) |
| 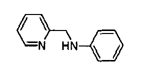 | 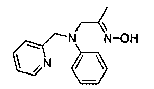 | | (*) |
| 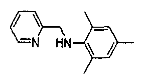 | 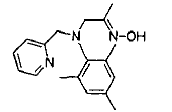 | | (*) |
| 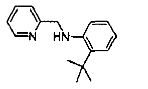 | 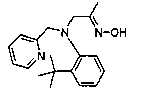 | | (*) |

### Polymerisation of ethylene.

### Preparation of active catalyst system.

Four ligands were complexed with a metallic precursor.

### Ligand L1

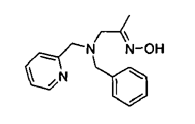

### Ligand L2

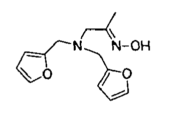

### Ligand L3

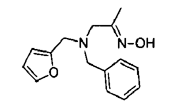

### Ligand L4

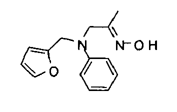

These ligands were complexed with metallic precursor Ni(DME)Br₂. In a glovebox, a solution of 25 µmol of ligand in 6 mL of tetrahydrofuran (THF) was added to a Schlenk, followed by a solution of 25 µmol of metallic precursor in 6 mL of THF. The complexation reaction was carried out for a period of time of 4 h under stirring. THF was then removed under vacuum for a period of time of 3 h.

The catalyst component was then activated with 1000 equivalents of methylaluminoxane (MAO). 4 mL of a 30 wt.% solution of MAO in toluene (730 equ) were added to the untreated complexation product and the mixture was kept under stirring for 5 to 10 minutes. In the reactor under inert atmosphere 50 mL of toluene were added followed by the addition of a scavenger solution prepared from 1.5 mL of a 30 wt.% solution of MAO in toluene (270 equ) and 3.5 mL of toluene, followed by the addition of the activated complex diluted in 1 mL of toluene. The temperature was raised to 35 °C and the polymerisation of ethylene was carried out at a temperature of 35 °C and under an ethylene pressure of 15 bar, for a period of time of about 2 h.

Oligomers and polymers of ethylene were recovered after degassing. The polymers were washed with a 5 % MeOH/HCl, then with MeOH and finally with acetone. They were then dried under vacuum overnight.

The results are summarised in Table III.

**TABLE III.**

| **Catalyst** | **Amount complex** (µmol) | **Colour before activation** | **Colour after activation** | **Mass PE (g)** | **Polymerisation time (min)** | **C2 consumed (kg/h.mol)^{*(*a*)*}** | **Activity (kgPE/h.mol)** | **Tₘ*^{(b)}* (°C)** |
|---|---|---|---|---|---|---|---|---|
| Ni(DME)Br₂ + **L1** | 25 | **Pale green** | **orange** | 0.14 | 126 | 99 | 2.7 | 124 |
| Ni(DME)Br₂ + **L2** | 25 | **Yellow- green** | **dark brown** | 0.15 | 129 | 896*^{(c)}* | 2.8 | 112 |
| Ni(DME)Br₂ + **L2** | 5 | | | 0.24 | 128 | 1185 | 22.5 | 120 |
| Ni(DME)Br₂ + **L3** | 25 | **Yellow- green** | **Dark brown** | 0.37 | 126 | 722 | 7.0 | 112 |
| Ni(DME)Br₂ + **L4** | 25 | **Green (pink in THF)** | **black** | 1.17 | 128 | 489 | 21.8 | 110 |

| | | | | | | | | |
|---|---|---|---|---|---|---|---|---|
| a) measured after 1 h b) Melting point measured by Differential Scanning Calorimetry (DSC) method c) Full reactor | | | | | | | | |

These results show that ligands L2, L3 and L4 carrying a furane group lead to efficient catalysts systems.

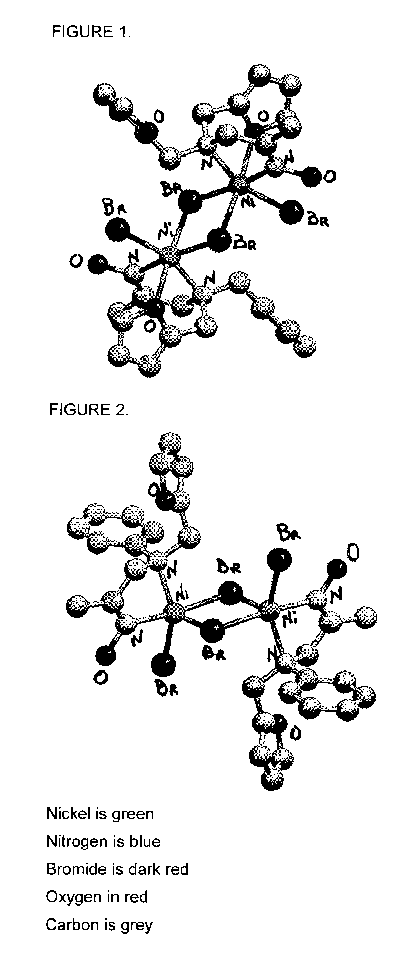

The structure of the complexes prepared from ligands L2 and L4 are represented respectively in figures 1 and 2.

It can be seen in figure 1 that in the case of a furane-furane ligand, nickel coordinates the 2 nitrogen atoms and the oxygen atom of one of the two furanes. Figure 2 shows that for a furane-phenyl ligand, only the nitrogen atoms are coordinated by nickel.

The concentration of metallic precursor and ligand in the solvent for the complexation step has also been studied for L2 ligand complexed with Ni(DME)Br2. The complexation reaction was carried out using 1 equivalent of ligand per atom of metal in THF for a period of time of 4h30. It was then dried under vacuum for 3 h. The complex was activated with 1000 equivalents of MAO and the polymerisation was carried out in toluene at a temperature of 35 °C, under an ethylene pressure of 15 bars and for a period of time of 2 hours. The concentration of metallic complex for the complexation step was varied as indicated in table IV and the polymerisation results are reported in the same table.

**TABLE IV.**

| Concentration for complexation step µmol/mL | C2 consumption^{(a)} Kg C2/mol Ni/h | Activity Kg PE /mol Ni/h |
|---|---|---|
| 2.1 | 1185 | 22.5 |
| 8.3 | 1103 | 60.6 |

| | | |
|---|---|---|
| (a) Quantity of complex for polymerisation = 10µmol | | |

It must be noted that the amount of Ni present in the reactor was the same for both polymerisations, but the complexes were prepared using different complex concentrations in the solvent and the increase in concentration of complexation leads to an increase of the polymerisation activity.

### Polymerisation of hexene.

Ligand L2 was tested in the polymerisation of hexene. In a glove box, a solution of 10 µmol of ligand L2 in 2.5 mL of THF was added to a Schlenk, followed by a solution of 10 µmol of metallic precursor Ni(DME)Br₂ in 2.5 mL of THF. The complexation reaction was carried out for a period of time of 4 h under stirring. 0.25 mL of that solution, corresponding to 0.5 µmol of each element, was taken and placed in a Schlenk under argon.T HF was then removed under vacuum for a period of time of 3 h.

The catalyst component was then activated with 2200 equivalents of methylaluminoxane (MAO). 220µL of a 30 wt.% solution of MAO in toluene were vaporised. The residue was dissolved in 2.5 mL of 1-hexene and the monomer/activator solution was added under stirring to the untreated complexation product. The polymerisation of 1-hexene was carried out at room temperature for a period of time of about 1 h. The polymerisation was ended by adding a 5 % MeOH/HCl and the solution was extracted with ⁿheptane. The polymer is retrieved after evaporation of ⁿheptane and drying under vacuum at a temperature of 50 °C during 24 h. 97 mg of polymer were obtained, corresponding to an activity in polyhexene of 194 kg/mol Ni/h.

## Claims

1. A monooxime ligand of general formula I 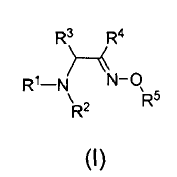 wherein R¹, R², R³, R⁴ and R⁵ are each independently selected from H or alkyl having from 1 to 20 carbon atoms or aryl having from 3 to 18 carbon atoms or functional groups such as heterocycles or two neighbouring Rⁱ taken can be linked together to form a ring.

2. The monooxime ligand of claim 1 wherein R¹, R², R³, R⁴ and R⁵ are each independently selected from hydrogen, methyl, isopropyl, n-butyl, benzyl, cyclohexyl, pyridine, thiophene, furane, phenyl, mesityl.

3. The monooxime ligand of claim 2 wherein at least one of Rⁱ is an heterocycle.

4. A method for preparing the monooxime ligand of any one of claims 1 to 3 that comprises the steps of:
a) dissolving in a solvent a secondary amine of formula 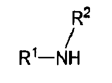 wherein R¹ and R² are described here-above.
b) suspending in the same or another solvent an oxime precursor of formula 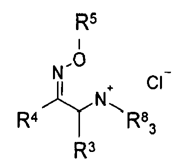 wherein R³, R⁴ and R⁵ are as described above and R⁸ is an alkyl group
c) reacting the secondary amine with at least 1 equivalent of the oxime precursor;
d) separating the oxime ligand from residual oxime precursor and salt by-product;
e) retrieving the oxime ligand.

5. A method for preparing a catalyst component by complexation reaction of a metallic precursor and the monooxime ligand of any one of claims 1 to 3, wherein the metal is selected from Groups 6 to 10 of the Periodic Table.

6. The method of claim 5 wherein the metal in the metallic precursor is Ni, Cr, Co, Fe or Pd.

7. A catalyst component obtainable by the method of claim 5 or claim 6.

8. An active catalyst system comprising the catalyst component of claim 7 and an activating agent having an ionising action.

9. The active catalyst system of claim 8 wherein the activating agent is aluminoxane.

10. A method for homo- or co-polymerising ethylene or alpha olefins that comprises the steps of
a) injecting the active catalyst system of claim 8 or claim 9 into the reactor;
b) injecting the monomer and optional comonomer into the reactor;
c) maintaining under polymerising conditions;
d) retrieving the polymers.

11. The method of claim 10 wherein the alpha-olefin is propylene or 1-hexene.
